(19) Europäisches Patentamt
European Patent Office
Office européen des brevets

(11) EP 0 763 071 B1

(12) EUROPÄISCHE PATENTSCHRIFT

(45) Veröffentlichungstag und Bekanntmachung des Hinweises auf die Patenterteilung:
**03.01.2001 Patentblatt 2001/01**

(21) Anmeldenummer: **96903898.3**

(22) Anmeldetag: **24.02.1996**

(51) Int Cl.[7]: **C08J 7/04**, G01N 19/02, B60S 1/38 // C08L21:00

(86) Internationale Anmeldenummer:
**PCT/DE96/00312**

(87) Internationale Veröffentlichungsnummer:
**WO 96/26972 (06.09.1996 Gazette 1996/40)**

(54) **ELASTOMERE MIT REIBUNGSVERMINDERNDER BESCHICHTUNG**

ELASTOMERS WITH ANTIFRICTION COATING

ELASTOMERES A REVETEMENT ANTIFRICTION

(84) Benannte Vertragsstaaten:
**BE DE ES FR GB IT**

(30) Priorität: **01.03.1995 DE 19506851**
**18.12.1995 DE 19547088**

(43) Veröffentlichungstag der Anmeldung:
**19.03.1997 Patentblatt 1997/12**

(73) Patentinhaber: **ROBERT BOSCH GMBH**
**70442 Stuttgart (DE)**

(72) Erfinder:
- **MERKEL, Wilfried**
**D-77876 Kappelrodeck (DE)**
- **LEUTSCH, Wolfgang**
**D-77830 Bühlertal (DE)**
- **GERHARD, Volker**
**D-66125 Saarbrücken (DE)**
- **GROSS, Frank**
**D-66121 Saarbrücken (DE)**
- **SCHMIDT, Helmut**
**D-66130 Saarbrücken (DE)**

(56) Entgegenhaltungen:
**EP-A- 0 467 406**

- **DATABASE WPI Derwent Publications Ltd., London, GB; AN 87-302908 XP002004150 & JP,A,62 212 442 (NIPPON OIL SEAL IND CO LTD) , 18.September 1987**
- **DATABASE WPI Derwent Publications Ltd., London, GB; AN 87-182217 XP002004151 & JP,A,62 112 647 (ASAHI GLASS KK) , 23.Mai 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 763 071 B1

## Beschreibung

Elastomere sind bekanntlich polymere Stoffe mit gummielastischem Verhalten, die bei Raumtemperatur praktisch voll reversibel auf ein Mehrfaches ihrer normalen Länge ausgedehnt werden können und gerade wegen dieser Eigenschaft vielfache Anwendung in der Technik gefunden haben. Neben dem elastischen Verhalten kommt es dabei häufig auch auf den Reibungswiderstand an, der bei manchen Anwendungen, z.B. bei Kraftfahrzeugreifen und Schuhsohlen, möglichst hoch, bei anderen Anwendungen dagegen, z.B. als Scheibenwischergummi, möglichst niedrig sein soll.

An Scheibenwischerblätter werden hohe, teilweise gegenläufige Anforderungen gestellt. Einerseits müssen sie so hart und stabil sein, daß sie die mechanischen Beanspruchungen unter den Bedingungen des praktischen Betriebs möglichst lange ohne Schaden aushalten. Zum anderen müssen sie aber elastisch genug sein, um über die gesamte überstrichene Fläche einen möglichst gleichen Anpressdruck auf die Scheibe zu übertragen. Darüber hinaus soll der Reibungswiderstand gegenüber Glas bei Naßreibung und insbesondere bei Trockenreibung möglichst klein sein, damit einerseits der Wischer mechanisch möglichst wenig beansprucht wird sowie mit möglichst geringer Energie betrieben werden kann und andererseits der Stick-Slip-Effekt, d.h. das Rubbeln beim Wischen insbesondere der trokkenen Scheibe, vermieden wird. Es ist bekannt, daß man den Reibungswiderstand durch Nachbehandlungen des Gummis vermindern kann, beispielsweise durch Aufstauben fester Substanzen, wie Talk oder Zinkstearat, oder durch eine chemische Nachbehandlung, z.B. mit einem Halogen, Schwefelsäure oder Kaliumpermanganat. Die Chlorierung mit elementarem Chlor gehört zu den meistverbreiteten Nachbehandlungsverfahren. Sie ist jedoch mit Gesundheits- und Sicherheitsrisiken verbunden, ist nicht befriedigend reproduzierbar und ist zudem mit einer Verschlechterung physikalischer und chemischer Eigenschaften verbunden, beispielsweise verminderter Ozonbeständigkeit, schnellerer Materialermüdung und erhöhtem Verschleiß.

Es ist weiterhin bekannt, daß sich der Reibungswiderstand vermindern bzw. die Gleiteigenschaften dadurch verbessern lassen, daß man die Oberflächen beschichtet. Dieses Verfahren wird vornehmlich bei Elastomeren angewandt, bei denen die Chlorierung versagt, beispielsweise bei Ethylen-Propylen-Dien-Copolymeren. Die Beschichtung kann aus weichen Einstellungen der genannten Copolymeren bestehen, basiert aber zu einem großen Teil auf fluororganischen Verbindungen, z.B. Polytetrafluorethylen, das sich durch hervorragende Gleiteigenschaften auszeichnet. Perfluorierte Polymere haften jedoch schlecht auf den Substraten, so daß gegbenenfalls aufwendige Vorbehandlungen erforderlich sind, um gute Haftung zu gewährleisten. Weiterhin sind perfluorierte Polymere weich. Ihre Oberfläche wird daher leicht beschädigt, wodurch die Funktion des betreffenden Bauteils, z.B. eines Scheibenwischerblatts oder einer Dichtung, wesentlich beeinträchtigt wird.

Naß et al. (Synthesis and Properties of Transparent $ZrO_2$ Containing $SiO_2$ Polymethacrylate Polymers, SPIE Vol. 1328 Sol-Gel Optics [1990], S. 258ff) haben ein Verfahren beschrieben, bei dem ein Sol, das aus 3-Methacryloxysilan, Zirkonpropylat und Methacrylsäure entsteht, als Beschichtungsmittel eingesetzt wird. Durch radikalische Polymerisation bildet sich neben dem anorganischen Gerüst ein stabilisierendes organisches Netzwerk. Das Zirkon ist in beide eingebunden. Diese anorganisch-organischen Polymeren, auch als Ormocere (organically modified ceramics) bezeichnet, sind jedoch verhältnismäßig spröde und zeigen auf Gummioberflächen eine unbefriedigende Haftung. Zudem ist Zirkonpropylat ein verhältnismäßig teurer Rohstoff.

Aus EP 0 467 406 A3 ist eine filmbildende Organosiloxanzusammensetzung bekannt, die zunächst aus einem Organopolysiloxan-Copolymer besteht, das auf einer Verbindung der Art $R_xSiO_{(4-x)/2}$ mit x zwischen 1 und 1,3, wobei R eine einwertige Kohlenwasserstoffgruppe ist, auf einer Verbindung der Art $R^1_ySiOR^2O_{(3-y)/2}$ , worin $R^1$ eine siliziumgebundene, hydrolisierbare funktionelle Gruppe ist, $R^2$ eine einwertige Kohlenwasserstoffgruppe ist und y zwischen 1,8 und 2 liegt, und schließlich auf einem geradkettigen Siloxan der Art $R^3_2SiO$, worin $R^3$ wiederum eine monovalente Kohlenwasserstoffgruppe ist, beruht. Im weiteren ist daraus bereits bekannt, als Rest $R^1$ eine hydrolysierbare funktionelle Alkoxygruppe (Alkylrest-O-) oder Oxim-($R_{1R2}$ >C=N-OH) oder Acetoxygruppe ($-O-CO-CH_3-$) einzusetzen. Das Organopolysiloxan-Copolymer kann weiter aus einer Verbindung der Art

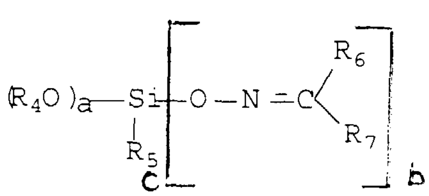

wobei $R_4$, $R_5$, $R_6$ und $R_7$ monovalente Kohlenwasserstoffgruppen sind, beruhen. Daneben können auch geringe Mengen von Organosiloxanen, die eine Epoxygruppe tragen und/oder von Organosiloxanen, die eine Alkenylgruppe tragen, zugesetzt sein.

Aus JP-A 62 112 647 ist eine Kautschukzusammensetzung bekannt, die aus Gummi, einem fluorierten gummiartigen Elastomer, einem Organopolysiloxan, einem Trimethoxysilan und einem Füllstoff besteht. Diese kann beispielsweise als gutgleitende Gummimischung für Dichtungen aber auch Scheibenwischer eingesetzt werden, und wird dazu bei einer Temperatur von 150°C bis 250°C vulkanisiert. Das fluorierte, gummiartige Elastomer enthält dabei einen Glycidylvinylether als reaktive Gruppe. Das Organosilan trägt als reaktive Gruppe eine Aminogruppe und besteht weiterhin aus einem Dimethylsiloxan und einem Trifluoropropylsiloxan.

Vorteile der Erfindung

Die hartelastischen Beschichtungen nach der Erfindung vermindern den Reibungswiderstand von Elastomeren gegenüber Glas sowohl bei Trockenreibung, als auch bei Naßreibung erheblich, sie haften gut auf Gummioberflächen, sind hochelastisch und hinreichend abriebbeständig. Sie eignen sich daher hervorragend zur Beschichtung von Scheibenwischerblättern aus Gummi. Die Beschichtungen vermindern den Reibungswiderstand von nicht chloriertem Gummi auf Werte, die denen von chloriertem Gummi entsprechen, und sie setzen den vergleichsweise niedrigen Reibungswiderstand von chloriertem Gummi deutlich weiter herab. Die Materiallien, die für die Herstellung der Beschichtung nach der Erfindung benötigt werden, sind wohlfeil und vielfach in technischen Mengen im Handel erhältlich. Aus Umweltschutzgründen bedenkliche Chemikalien, wie Chlor und chlorierte Kohlenwasserstoffe, werden nicht benötigt. Das Verfahren ist nicht aufwendig und verwendet in der Technik übliche Apparate und Verfahren. Es ist zuverlässig, d.h. es ergibt reproduzierbare Ergebnisse.

Beschreibung der Erfindung

Die beschriebenen Vorteile werden mit den Verfahren nach den Patentansprüchen 1 bis 9 und durch die Scheibenwischerblätter nach dem Patentanspruch 10 erzielt. Zu den elastomeren Substraten, die nach der Erfindung mit Erfolg beschichtet werden können, zählt insbesondere Gummi, also das elastische Produkt, das durch Vulkanisieren von Naturkautschuk, Polychloropren usw. mit verhältnismäßig geringen Mengen Schwefel in bekannter Weise erhältlich ist. Es kann unmittelbar für das Verfahren nach der Erfindung eingesetzt werden oder zuvor eine der erwähnten Oberflächenbehandlungen, z.B. eine Chlorierung, erfahren haben.

Die durch das Verfahren nach der Erfindung erzeugten ausgehärteten Beschichtungen sind, wie die von Naß et al. beschriebenen Materialien, anorganisch-organische Komposite, also Orcomere, zeigen jedoch nicht deren oben beschriebene Nachteile. In der ersten Stufe des Verfahrens nach der Erfindung wird aus einem Silan ein Sol hergestellt. Das Silan ist ein Alkoxysilan und entspricht der Formel $R^1Si(OR')_3$ (I), in der $R^1$ einen Glycidyloxy-funktionalen oder einen Merkapto-funktionalen Rest und R' einen niederen Alkylrest mit 1 bis 4 Kohlenstoffatomen, und insbesondere einen Methylrest bedeutet. Die Glycidyloxy-funktionalen Reste $R^1$ sind in der Regel Glycidyloxysubstituierte Alkylreste mit 1 bis 8 Kohlenstoffatomen. Das bevorzugte Silan mit Glycidyloxy-funktionalem Rest $R^1$ ist das 3-Glycidyloxypropyl-1-trimethoxysilan (GPTS). Merkapto-funktionale Reste $R^1$ sind in der Regel Merkaptoalkyl-Reste mit 2 bis 8 Kohlenstoffatomen. Der bevorzugte Merkaptoalkyl-Rest ist der 3-Merkaptopropylrest, das bevorzugte Silan mit Merkapto-funktionalem Rest $R^1$ ist das 3-Merkaptopropyl-1-trimethoxysilan.

Der erste Schritt der Umwandlung der Silane (I) unter Mitverwendung eines Silans der Formel $R^2_xSi(OR')_{4-x}$ in ein Sol ist eine Hydrolysereaktion, in der aus den Alkoxyresten Hydroxylgruppen entstehen, die wiederum zu Kondensationsreaktionen - mit anderen Hydroxylgruppen unter Austritt von Wasser, mit Alkoxygruppen unter Austritt von Alkohol - befähigt sind. Die Kondensationsreaktionen führen zur Ausbildung von Siloxanstrukturen. Dabei laufen Hydrolyse und Kondensation nebeneinander ab. Die Kondensation wird allerdings erst bei der anschließenden Aushärtung des Sols zum Gel unter Ausbildung einer hochvernetzten Siloxanstruktur vervollständigt. Zur Hydrolyse verwendet man zweckmäßig verdünnte wäßrige Säure, wie 0,1 n Salzsäure. Wenn man bei Glycidyloxy-funktionalen Silanen für die Hydrolyse die stöchiometrische Menge Wasser (3 Mol Wasser/Mol Silan) oder gar einen Überschuß einsetzt, wird ein Teil der Epoxidringe säurekatalysiert zum Diol geöffnet und geht somit für die Polyaddition bei der nachfolgenden Aushärtung verloren was zu einem Verlust an elastischen Eigenschaften führt. Es ist daher empfehlenswert, mit einem stöchiometrischen Unterschuß, beispielsweise mit der halben stöchiometrischen Menge, zu arbeiten. Die Kondensation läuft dann überwiegend zwischen Hydroxyl- und Alkoxygruppen unter Bildung von Alkohol ab, und die Hydrolyse des Epoxidringes wird zurückgedrängt.

Die Sol-Reaktion kann ohne Lösungs- oder Verdünnungsmittel durchgeführt werden. Der Zusatz eines inerten Lösungs- oder Verdünnungsmittels kann zweckmäßig sein, wenn das Gemisch aus dem Silan (I) und den Silanen (II) und gegebenenfalls (III), wie in der Folge ausgeführt, sowie gegebenenfalls weiteren Zusatzstoffen bei den gewählten Reaktionstemperaturen - im allgemeinen Raumtemperatur oder leicht erhöhte bzw. erniedrigte Temperaturen, wie -10 bis +60° C - so viskos ist, daß das Einmischen des Wassers für die Hydrolyse durch das Lösungs- oder Verdünnungsmittel erleichtert wird. Als solches eignet sich insbesondere der Alkohol R'OH, der den Alkoxyresten des Silans (I) entspricht. Es sollte allerdings nur soviel Lösungs- und Verdünnungsmittel verwendet werden, daß das Sol nach dem

Aufbringen auf das Substrat und dem Verdampfen des Lösungsund Verdünnungsmittels eine Beschichtung mit der gewünschten Schichtdicke ergibt.

Die Sol-Reaktion läuft verhältnismäßig schnell ab; sie ist im allgemeinen nach 15 Minuten bis 5 Stunden beendet.

Die Mitverwendung des Silans der Formel $R^2{}_xSi(OR')_{4-x}$ (II) fördert die Benetzbarkeit der Substrate durch das Sol und damit die Ausbildung von zusammenhängenden, ebenen Schichten auf dem Substrat. Dieser Effekt dürfte mit dem hydrophoben Charakter des oder der Substituenten $R^2$ zusammenhängen. In der Formel bedeutet nämlich $R^2$ jeweils einen halogenierten höheren Alkylrest oder einen niederen Alkylrest, wobei jedoch mindestens ein Substituent $R^2$ ein halogenierter, insbesondere ein fluorierter höherer Alkylrest ist. R' bezeichnet einen niederen Alkylrest, und x steht für eine ganze Zahl von 1 bis 3. Das Silan (II) wird aufgrund seiner Alkoxygruppe(n) in die Siloxan-Struktur des Sols eingebaut und verbessert durch seine(n) hydrophoben Substituenten $R^2$ die Benetzung der hydrophoben Oberfläche des Substrats. Besonders geeignete Silane (II) sind diejenigen, die einen halogenierten, insbesondere fluorierten Alkylrest mit 5 bis 18 Kohlenstoffatomen, in dem mindestens 50% der Wasserstoffatome durch Fluor ersetzt sind, sowie 4-x Alkoxyreste mit vorzugsweise 1 bis 4 Kohlenstoffatomen, insbesondere Methylreste enthalten. Von den geeigneten Silanen (II) seien beispielsweise Tridecafluoro-1,1,2,2-tetrahydro-octyl-1-triethoxysilan, Tridecafluoro-1,1,2,2-tetrahydro-octyl-1-methyl-dimethoxysilan, und Heptadecafluoro-1,1,2,2-tetrahydrodecyl-1triethoxysilan erwähnt. Das Silan (II) wird zweckmäßig in Mengen von 0,1 bis 10 Mol%, insbesondere von 0,5 bis 2 Mol% zugesetzt, bezogen auf das Silan (I).

Ein anderer Ausgangsstoff, der bei der Herstellung des Sols wahlweise mitverwendet wird, ist ein Silan der Formel $R^3{}_x Si(OR')_{4-x}$ (III), das insbesondere bei Verwendung von Merkapto-funktionalen Silanen (I) den Reibungswiderstand weiter vermindert. In der Formel bedeutet $R^3$ jeweils einen Alkylrest, vorzugsweise mit 1 bis 18 Kohlenstoffatomen, bedeutet R' einen niederen Alkylrest, vorteilhaft mit 1 bis 4 Kohlenstoffatomen, und insbesondere den Methylrest, und steht x für eine ganze Zahl von 1 bis 3. Das Silan (III) wird gegebenenfalls in Mengen eingesetzt, die im allgemeinen im Bereich von 5 bis 40 Mol%, insbesondere von 10 bis 20 Mol% liegen, und wird aufgrund seiner Alkoxygruppe(n) ebenfalls in das Siloxangerüst des Sols eingebaut.

Wenn das Silan (I) Glycidyloxy-funktional ist, kann das Sol weiterhin einen Epoxidharzhärter enthalten. Als solche eignen sich insbesondere aromatische Polyhydroxyverbindungen, z.B. zweiwertige Phenole, wie Bisphenol A. Der Epoxidharzhärter trägt bei der anschließenden Aushärtung des Sols zur weiteren Vernetzung des Siloxangerüstes bei. Er wird zweckmäßig im stöchiometrischen Unterschuß, bezogen auf das Silan (I), zugesetzt, z.B. bis zu 0,4 Mol Bisphenol A pro Mol Silan (I).

Das Sol kann auch verstärkende feinteilige anorganische Materialien enthalten, beispielsweise Böhmit mit Teilchengrößen im Nanometerbereich. Mit Mengen von 1 bis 20 Gew.%, bezogen auf das Silan (I), erhält man ein mit anorganischem Material angereichertes Netzwerk von hoher Stabilität, das noch ausreichend elastisch ist.

Als Kondensationskatalysatoren, die die Aushärtung des Sols zum Gel fördern, haben sich tertiäre Amine mit aromatischer Struktur besonders bewährt. Geeignete Amine dieser Art sind beipielsweise Imidazol, 1-Methylimidazol und, wenn auch weniger wirksam, Pyridin und die isomeren Methylpyridine. Diese Katalysatoren werden zweckmäßig in Mengen von 0,1 bis 15, insbesondere 2 bis 10 Mol%, bezogen auf das Silan (I) und die Silane (II) und (III), zugefügt.

Zur Herstellung des Sols kann man das Silan (I) vorlegen und unter Rühren bei Raumtemperatur nach und nach das für die Hydrolyse benötigte Wasser, zweckmäßig in Form von verdünnter Mineralsäure, zugeben. Danach werden gegebenenfalls, gleichzeitig oder in beliebiger Reihenfolge, das feinteilige anorganische Material, der Epoxidharzhärter, der Kondensationskatalysator sowie die Silane (II) und (III) zugegeben, und die letzteren werden hydrolysiert.

Das Sol wird gegebenenfalls mit einem inerten Lösungs- und Verdünnungsmittel auf einen Feststoffgehalt verdünnt, der der gewünschten Schichtdicke der aus dem Sol erzeugten ausgehärteten Beschichtung entspricht. Diese liegt in der Regel zwischen 1 und 10 $\mu$m. Der Zusammenhang zwischen dem Gehalt eines Sols an Lösungs- und Verdünnungsmittel und der Schichtdicke läßt sich für ein gegebenes System durch Vorversuche leicht ermitteln. Das Sol wird nach üblichen Methoden auf die Substrate aufgebracht. Diese können, wie erwähnt, eine chemische Oberflächenbehandlung erfahren haben und werden zweckmäßig vor der Beschichtung mit einem Lösungsmittel, wie Ethanol, Isopropanol oder Aceton, oberflächlich gereinigt und mit ölfreier Luft abgeblasen. Eine Grundierung der Substrate nach der Reinigung und vor der Beschichtung mit dem Sol durch Behandlung mit einem Merkapto-funktionalen Silan, beispielsweise einem Merkapto-funktionalen Silan (I), ist besonders empfehlenswert, wenn das für die Herstellung des Sols eingesetzte Silan (I) ein Glycidyloxy-funktionales Silan ist. Das Merkapto-funktionale Silan fördert die Haftung des bei Härtung des Sols entstehenden Gels auf dem Substrat. Als Beschichtungsverfahren eignen sich z.B. die Tauchbeschichtung oder die Schleuderbeschichtung (Spin-Coating). Natürlich ist es möglich, das Sol nur auf Teile eines Gegenstandes aufzubringen, beispielsweise auf die Lippen von Scheibenwischerblättern.

Aus dem aufgebrachten Sol wird das Lösungs- und Verdünnungsmittel verdampft, und das Sol wird zum Gel ausgehärtet. Beides kann bei erhöhter Temperatur, beispielsweise von 50° bis 120° C in einem Luftstrom geschehen. Die Aushärtung nimmt in der Regel 10 Minuten bis 20 Stunden, vorteilhaft 1 bis 10 Stunden in Anspruch, wobei die

Beschichtungen mit Glycidyloxy-funktionalen Silanen (I) schneller aushärten als die mit Merkapto-funktionalen Silanen (I) .

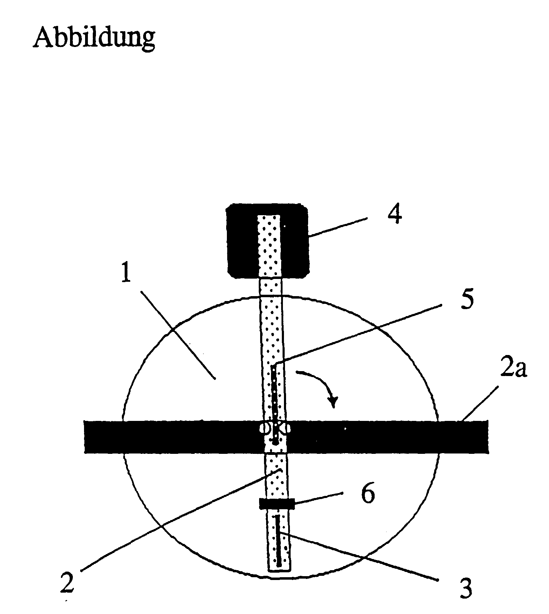

Die Abbildung zeigt in der Aufsicht eine Apparatur, wie sie für Bestimmung der Reibwerte in den folgenden Beispielen benutzt wurde: Eine kreisrunde Glasscheibe **1** wird durch einen Motor zum Rotieren gebracht. Am einen Ende des Armes 2 befindet sich eine Halterung für einen 5 cm langen Abschnitt **3** eines Scheibenwischerblattes, das andere Ende taucht zur Dämpfung der Schwingungen in ein Ölbad **4**. Der Angelpunkt des Armes ist an einer Querstrebe **2a** frei drehbar gelagert und betätigt eine Dehnungsmeßstreifen **5**. Der Arm **2** wird durch das Gewicht **6** so beschwert, daß der Wischerblattabschnitt **3** mit einer Kraft von 16 N/cm auf die Glasscheibe einwirkt. Durch den Reibungswiderstand zwischen dem rotierendem Glas und dem Wischerblattabschnitt 3 wird der Arm **2** horizontal ausgelenkt und gegen den Dehnungsmeßstreifen **5** gedrückt. Dadurch wird ein elektrisches Signal erzeugt, dessen Intensität nach Verstärkung auf einer Skala abgelesen wird. Dies ist der (trocken gemessene) einheitslose Reibwert $\mu^T$ . Er stellt für eine bestimmte Gleitgeschwindigkeit bei einer bestimmten Auflagekraft eine für die Beschichtung des Wischerblattabschnittes **3** charakteristische Kenngröße dar. Die Gleitgeschwindigkeit der Glasscheibe **1** am Auflagemittelpunkt des Wischerblattabschnitts **3** wird auf 20 cm/sec eingeregelt. Die Messungen wurden bei Raumtemperatur ausgeführt, und die Werte wurden jeweils nach 1 min Wartezeit abgelesen. Nach jeweils 5 Messungen wurde die Oberfläche der Glasscheibe **1** mit der wäßrigen Lösung eines handelsüblichen Spülmittels gereinigt, mit entsalztem Wasser abgespült, trocken gerieben und mit ölfreier Luft abgeblasen. Die Wischerblattabschnitte **3** wurden vor der Messung mit Isopropanol gereinigt und mit ölfreier Druckluft abgeblasen. Zur Bestimmung des Naßreibwerte $\mu^N$ wurde etwas Wasser auf die Scheibe aufgebracht.

Als Substrat wurde Gummi aus vulkanisiertem Naturkautschuk, chloriertem vulkanisierten Naturkautschuk, vulkanisiertem Chloroprenkautschuk und chloriertem Chloroprenkautschuk verwendet. Die Chlorierung wurde durch Behandlung mit Chlorwasser in üblicher Weise durchgeführt.

Die in den Beispielen verwendeten Abkürzungen haben die folgenden Bedeutungen:

| | |
|---|---|
| NKu | vulkanisierter natürlicher Kautschuk, unchloriert |
| CKu | vulkanisierter Chloroprenkautschuk (Neoprene), unchloriert |
| NKc | vulkanisierter natürlicher Kautschuk, chloriert |
| CKc | vulkanisierter Chloroprenkautschuk (Neoprene), chloriert |
| GPTS | 3-Glycidyloxypropyl-1-trimethoxysilan |
| BPA | Bisphenol A |
| FTS | Tridecafluoro-1,1,2,2-tetrahydrooctyl-1-triethoxysilan |
| MI | 1-Methylimidazol |
| MTMO | 3-Merkaptopropyl-1-trimethoxysilan |
| MTES | Methyltriethoxysilan |
| PTMS | Propyltrimethoxysilan |
| OTMS | n-Octyltrimethoxysilan |
| ODTMS | Octadecyltrimethoxysilan |

<u>Beispiel 1 -</u> Sol aus GPTS/BPA/FTS/MI

9,44 g GPTS (0,04 mol) wurden in einem 40 ml Schnappdekkelglas vorgelegt, und unter Rühren wurden 1,08 g 0,1 n Salzsäure (0,06 mol) zugetropft. Man ließ die Mischung, die nach 45 sec klar wurde, 12 h bei Raumtemperatur rühren. Dann wurden 3,65 g (0,016 mol) festes BPA zugefügt. Nach Auflösen des Feststoffes wurden 0,16 g MI (2 mmol) sowie 0,20 g FTS (0,04 mmol) zugesetzt, und es wurde eine weitere Stunde gerührt. Das entstandene Sol wurde mit 8 g 2-Isopropoxyethanol verdünnt.

<u>Beispiel 2 -</u> Sol aus GPTS/FTS/MI

Die Herstellung folgte Vorschrift des Beispiels 1, wobei jedoch der Schritt der Zugabe des BPA fortgelassen wurde.

<u>Beispiel 3 -</u> Sol aus MTMO/FTS/MI

7,84 g MTMO (0,04 mol) werden in einem 40 ml Schnappdeckelglas vorgelegt, und unter Rühren werden 1,08 g 0,1 n Salzsäure (0,06 mol) zugetropft. Man ließ die Mischung, die nach etwa 1 min klar wurde, 10 min bei Raumtemperatur rühren. Dann wurden 0,20 g FTS (0,04 mmol; 1 Mol%), 0,40 g FTS (0,08 mmol; 2 Mol%), 0,60 g FTS (0,12 mmol; 3Mol%) bzw. 0,80 g FTS (0,16 mmol; 4 Mol%) zugesetzt, und das Gemisch wurde 12 h bei Raumtemperatur gerührt. Danach werden 0,16 g MI (2,0 mmol) zugegeben. Das Gemisch wurde eine weitere Stunde gerührt und dann

mit 4 g 2-Isopropoxyethanol verdünnt.

Beschichtung von Substraten und Aushärten der Sole zu Gelen

Es wurden Scheibenwischerblätter aus verschiedenen Gummitypen beschichtet. Diese wurden mit einem Ethanol, Isopropanol oder Aceton getränkten fusselfreien Wischpapier abgewischt und dann mit ölfreier Druckluft abgeblasen. Alle Substrate wurden grundiert, indem man sie in eine frisch bereitete 10 Gew% Lösung MTMO in Ethanol tauchte, die Lösung nach dem Herausziehen kurz abtropfen und dann das Substrat 1 h bei 90° C trocknen ließ.

Die Scheibenwischerblätter, von denen die Abschnitte für die Ermittlung der Reibwerte geschnitten wurden, ließ man mit ihren Wischlippen in die verdünnte Sole nach den Beispielen 1 bis 3 eintauchen und nach dem Herausziehen mit konstanter Geschwindigkeit kurz abtropfen. Das Lösungs- und Verdünnungsmittel wurde verdampft, und die Sole wurden zu Gelen gehärtet, indem die Scheibenwischerblätter in einem Umluftofen auf 90° C erhitzt wurden. Die Aushärtungszeit betrug bei den Solen auf Basis GPTS 4 h und bei den Solen auf Basis MTMO 8 Stunden. Die beschriebenen Sole waren so verdünnt, daß Beschichtungen mit einer Stärke ca. 5 µm erhalten wurden.

Die gemessenen Reibwerte gehen aus der folgenden Tabelle hervor.

Tabelle

| Reibwerte verschiedener Beschichtungen | | | | | | |
|---|---|---|---|---|---|---|
| Beschichtung | | Reibwert | Substrat | | | |
| aus | Beispiel | $\mu^T$ / $\mu^N$ | NKu | CKu | NKc | CKc |
| unbeschichtet | - | $\mu^T$ | 5,6 | 5,5 | 2,5 | 3,4 |
| unbeschichtet | - | $\mu^N$ | 1,15 | 1,15 | 0,85 | 0,90 |
| GPTS/BPA/MI mit | | | | | | |
| - 0,5 Mol% FTS | 1 | $\mu^T$ | 2,2 | | - 1,5 | - |
| - 0,5 Mol% FTS | 1 | $\mu^N$ | 0,65 | - | 0,75 | - |
| - 1,0 Mol% FTS | 1 | $\mu^T$ | 2,1 | | - 1,8 | - |
| - 1,0 Mol% FTS | 1 | $\mu^N$ | 0,55 | - | 0,70 | - |
| - 1,5 Mol% FTS | 1 | $\mu^T$ | 2,0 | - | 1,3 | - |
| - 1,5 Mol% FTS | 1 | $\mu^N$ | 0,60 | - | 0,70 | - |
| - 2,0 Mol% FTS | 1 | $\mu^T$ | 2,4 | | - 1,5 | - |
| - 2,0 Mol% FTS | 1 | $\mu^N$ | 0,65 | - | 0,65 | - |
| - 3,0 Mol% FTS | 1 | $\mu^T$ | 2,8 | - | 1,3 | - |
| - 3,0 Mol% FTS | 1 | $\mu^N$ | 0,50 | - | 0,65 | - |
| GPTS/FTS/MI | 2 | $\mu^T$ | 3,3 | 3,0 | 1,6 | 1,1* |
| MTMO/MI mit | | | | | | |
| - 1 Mol% FTS | 3 | $\mu^N$ | 0,55 | - | 0,65 | - |
| - 2 Mol% FTS | 3 | $\mu^T$ | 1,8 | - | 1,9 | - |
| - 2 Mol% FTS | 3 | $\mu^N$ | 0,60 | - | 0,50 | - |
| - 3 Mol% FTS | 3 | $\mu^T$ | 1,6 | - | 2,0 | - |
| - 3 Mol% FTS | 3 | $\mu^N$ | 0,60 | - | 0,60 | - |
| - 4 Mol% FTS | 3 | $\mu^T$ | 2,0 | - | 2,4 | - |
| - 4 Mol% FTS | 3 | $\mu^N$ | 2,55 | - | 0,60 | - |

* Dieser Wert dürfte zu niedrig sein, weil die Beschichtung leicht wellig war.

Ein Vergleich der Trockenreibwerte für die beschichteten Scheibenwischerblätter mit dem für unbeschichtete Scheibenwischerblätter zeigt deutlich niedrigere Werte für die beschichteten Scheibenwischerblätter. Die Naßreibwerte der beschichteten Scheibenwischerblätter sind durchweg niedriger als die der vergleichbaren unbeschichteten Scheibenwischerblätter.

## Patentansprüche

1. Verfahren zur Herstellung von festhaftenden, hartelastischen und reibungsvermindernden Schichten auf elastomeren Substraten, bei dem man die Substrate mit einem Sol beschichtet das Silane enthält und das nach der Beschichtung zu einem Gel aushärtet, wobei die Silane die allgemeine Struktur $R^1Si(OR')_3$ (I) haben und $R^1$ ein glycidyloxy- oder merkapto-funktionaler Rest und R' ein niederer Alkylrest mit 1 bis 4 Kohlenstoffatomen ist, **dadurch gekennzeichnet,** daß man bei der Herstellung des Sols zusätzlich ein Silan der Formel $R^2{}_xSi(OR')_{4-x}$ (II) mitverwendet, in der $R^2$ jeweils ein halogenierter höherer Alkylrest mit 5 bis 18 Kohlenstoffatomen oder ein niederer Alkylrest mit 1 bis 4 Kohlenstoffatomen ist, mit der Maßgabe, daß mindestens einer der Reste $R^2$ ein halogenierter höherer Alkylrest ist, R' jeweils einen niederen Alkylrest mit 1 bis 4 Kohlenstoffatomen bezeichnet und x für eine ganze Zahl von 1 bis 3 steht.

2. Verfahren nach Anspruch 1, dadurch gekennzeichnet, daß in dem Silan (II) einer der Substituenten $R^2$ ein hochfluorierter Alkylrest mit 5 bis 18 Kohlenstoffatome ist, bei dem mindestens 50 % der Wasserstoffatome durch Fluoratome ersetzt sind, und die Substituenten R' niedere Alkylreste mit 1 bis 4 Kohlenstoffatomen sind.

3. Verfahren nach einem der Ansprüche 1 oder 2, dadurch gekennzeichnet, daß man bei der Herstellung des Sols ein Silan der Formel

$$R^3{}_xSi(OR')_{4-x} \qquad (III)$$

mitverwendet, in der $R^3$ jeweils einen Alkylrest mit 1 bis 18 Kohlenstoffatomen und R' jeweils einen niederen Alkylrest mit 1 bis 4 Kohlenstoffatomen bedeutet und x für eine ganze Zahl von 1 bis 3 steht.

4. Verfahren nach Anspruch 3, dadurch gekennzeichnet, daß in dem Silan (III) einer der Substituenten $R^3$ ein Alkylrest mit 1 bis 18 Kohlenstoffatomen ist und die Substituenten R' niedere Alkylreste mit 1 bis 4 Kohlenstoffatomen sind.

5. Verfahren nach einem der Ansprüche 1 bis 4, dadurch gekennzeichnet, daß der Substituent $R^1$ des Silans (I) ein Glycidyloxy-funktionaler Rest ist und das Sol einen Epoxidharzhärter enthält.

6. Verfahren nach einem der Ansprüche 1 bis 5, dadurch gekennzeichnet, daß der Substituent $R^1$ des Silans (I) ein Glycidyloxy-funktionaler Rest ist und die Oberfläche des Substrats vor dem Aufbringen des Sols mit einem Merkapto-funktionalen Silan grundiert wird.

7. Verfahren nach einem der Ansprüche 1 bis 6, dadurch gekennzeichnet, daß das Sol einen feinteiligen anorganischen Füllstoff enthält.

8. Verfahren nach einem der Ansprüche 1 bis 7, dadurch gekennzeichnet, daß das Sol einen Kondensationskatalysator enthält.

9. Verfahren nach einem der Ansprüche 1 bis 8, dadurch gekennzeichnet, daß man das Sol in einer solchen Menge und mit einem solchen Feststoffgehalt aufbringt, daß die ausgehärtete Beschichtung eine Stärke von 1 bis 10 $\mu$m hat.

10. Scheibenwischblätter aus Gummi, beschichtet nach dem Verfahren eines der Ansprüche 1 bis 9.

## Claims

1. Process for preparing firmly adhering, hard-elastic and reduced-friction layers on elastomeric substrates, in which process the substrates are coated with a sol which comprises silanes and which, after the coating, cures to give a gel, where the silanes have the general structure $R^1Si(OR')_3$ (I) and $R^1$ is a glycidyloxy- or a mercapto-functional radical and R' is a lower alkyl radical having from 1 to 4 carbon atoms, **characterized in that** during the preparation of the sol concomitant use is additionally made of a silane of the formula $R^2{}_xSi(OR')_{4-x}$ (II), in which each $R^2$ is a halogenated higher alkyl radical having from 5 to 18 carbon atoms or a lower alkyl radical having from 1 to 4 carbon atoms, with the proviso that at least one of the radicals $R^2$ is a halogenated higher alkyl radical, each R' indicates

a lower alkyl radical having from 1 to 4 carbon atoms and x represents an integer from 1 to 3.

2. Process according to Claim 1, characterized in that in the silane (II) one of the substituents $R^2$ is a highly fluorinated alkyl radical having from 5 to 18 carbon atoms, in which at least 50% of the hydrogen atoms have been replaced by fluorine atoms, and the substituents R' are lower alkyl radicals having from 1 to 4 carbon atoms.

3. Process according to either of Claims 1 and 2, characterized in that during the preparation of the sol concomitant use is made of a silane of the formula

$$R^3{}_xSi(OR')_{4-x} \quad \text{(III)}$$

in which each $R^3$ is an alkyl radical having from 1 to 18 carbon atoms and each R' indicates a lower alkyl radical having from 1 to 4 carbon atoms and x represents an integer from 1 to 3.

4. Process according to Claim 3, characterized in that in the silane (III) one of the substituents $R^3$ is an alkyl radical having from 1 to 18 carbon atoms and the substituents R' are lower alkyl radicals having from 1 to 4 carbon atoms.

5. Process according to one of Claims 1 to 4, characterized in that the substituent $R^1$ of the silane (I) is a glycidyloxy-functional radical and the sol comprises an epoxy resin hardener.

6. Process according to one of Claims 1 to 5, characterized in that the substituent $R^1$ of the silane (I) is a glycidyloxy-functional radical and, prior to application of the sol, the surface of the substrate is primed with a mercapto-functional silane.

7. Process according to one of Claims 1 to 6, characterized in that the sol comprises a fine-particle inorganic filler.

8. Process according to one of Claims 1 to 7, characterized in that the sol comprises a condensation catalyst.

9. Process according to one of Claims 1 to 8, characterized in that the amount and solids content of the sol applied are such that the cured coating has a thickness of from 1 to 10 μm.

10. Screen wiper blades made from rubber, coated by the process of one of Claims 1 to 9.

**Revendications**

1. Procédé de préparation de couches adhérentes, élastiques après durcissement, et diminuant le frottement, sur des substrats élastomères, dans lequel on enduit les substrats avec un sol qui contient des silanes et qui après, revêtement durcit complètement en un gel, dans lequel 'les silanes ont la structure générale :

$$R^1Si(OR')_3 \quad \text{(I),}$$

et $R^1$ est un reste fonctionnalisé par un glycidyloxy ou par un mercapto et R' est un reste alkyle inférieur ayant de 1 à 4 atomes de carbone,
caractérisé en ce qu'
on utilise conjointement lors de la préparation du sol, en supplément un silane de formule :

$$R^2{}_xSi(OR')_{4-x} \quad \text{(II),}$$

dans laquelle $R^2$ est un reste alkyle supérieur halogéné ayant de 5 à 18 atomes de carbone ou un reste alkyle inférieur ayant de 1 à 4 atomes de carbone avec la restriction qu'au moins un des restes $R^2$ est un reste alkyle supérieur halogéné, R' désigne un reste alkyle inférieur ayant de 1 à 4 atomes de carbone et x représente un nombre entier allant de 1 à 3.

2. Procédé selon la revendication 1,
caractérisé en ce que
dans le silane (II) un des substituants $R^2$ est un reste alkyle hautement fluoré ayant de 5 à 18 atomes de carbone, dans lequel au moins 50 % des atomes d'hydrogène sont remplacés par des atomes de fluor et les substituants R' sont des restes alkyle inférieurs ayant de 1 à 4 atomes de carbone.

3. Procédé selon l'une des revendications 1 ou 2,
caractérisé en ce qu'
on utilise conjointement lors de la préparation du sol, un silane de formule :

$$R^3{}_xSi(OR')_{4-x} \quad (III),$$

dans laquelle $R^3$ signifie un reste alkyle ayant de 1 à 18 atomes de carbone, et R' signifie un reste alkyle inférieur ayant de 1 à 4 atomes de carbone et x représente un nombre entier allant de 1 à 3.

4. Procédé selon la revendication 3,
caractérisé en ce que
dans le silane (III) un des substituants $R^3$ est un reste alkyle ayant de 1 à 18 atomes de carbone et les substituants R' sont des restes alkyle ayant de 1 à 4 atomes de carbone.

5. Procédé selon l'une des revendications 1 à 4,
caractérisé en ce que
le substituant $R^1$ du silane (I) est un reste fonctionnalisé par un glycidyloxy, et le sol renferme un durcisseur pour résine époxy.

6. Procédé selon l'une des revendications 1 à 5,
caractérisé en ce que
le substituant $R^1$ du silane (I) est un reste fonctionnalisé par un glycidyloxy, et la surface du substrat avant l'application du sol est apprêtée avec un silane fonctionnalisé par un mercapto.

7. Procédé selon l'une des revendications 1 à 6,
caractérisé en ce que
le sol renferme une substance de charge minérale en fines particules.

8. Procédé selon l'une des revendications 1 à 7,
caractérisé en ce que
le sol renferme un catalyseur de condensation.

9. Procédé selon l'une des revendications 1 à 8,
caractérisé en ce qu'
on applique le sol dans une quantité telle et avec une teneur en matière solide telle que le revêtement durci possède une épaisseur allant de 1 à 10 µm.

10. Lames d'essuie-glace en caoutchouc revêtues selon le procédé d'une des revendications 1 à 9.

Abbildung